Europäisches Patentamt

European Patent Office

Office européen des brevets

(11) Numéro de publication: **0 514 261 B1**

(12) **FASCICULE DE BREVET EUROPEEN**

(45) Date de publication de fascicule du brevet: **02.08.95**　(51) Int. Cl.6: **F16H 25/22**

(21) Numéro de dépôt: **92401301.4**

(22) Date de dépôt: **13.05.92**

(54) **Dispositif vis-écrou à roulement à jeu ou précharge réglable.**

(30) Priorité: **16.05.91 FR 9105967**

(43) Date de publication de la demande:
**19.11.92 Bulletin 92/47**

(45) Mention de la délivrance du brevet:
**02.08.95 Bulletin 95/31**

(84) Etats contractants désignés:
**AT BE CH DE DK ES FR GB IT LI NL SE**

(56) Documents cités:
**DE-C- 3 209 086**
**US-A- 2 936 645**
**US-A- 3 258 983**

(73) Titulaire: **TRANSROL**
**148, Rue Félix Esclangon,**
**Z.I. de Bissy**
**F-73009 Chambéry (FR)**

(72) Inventeur: **Druet, Clair Maurice**
**La Camalaz**
**F-73420 Drumettaz Clarafond (FR)**

(74) Mandataire: **Casalonga, Axel et al**
**BUREAU D.A. CASALONGA - JOSSE**
**Morassistrasse 8**
**D-80469 München (DE)**

**Description**

La présente invention se rapporte à un dispositif vis-écrou à roulement comprenant une vis et un écrou à filets multiples de pas identique, et des éléments roulants disposés entre les filets de la vis et de l'écrou, du type générique décrit dans le brevet US-A-3 258 983.

Les dispositifs vis-écrou à roulement, qu'ils soient à circulation de billes ou à rouleaux satellites, sont utilisés pour transfomer les mouvements de rotation en mouvement de translation, et inversement.

Dans un dispositif vis-écrou à billes ou à rouleaux satellites, les éléments roulants sont en contact oblique avec les flancs des gorges hélicoïdales ou filets de la vis et de l'écrou, suivant un angle dont la valeur nominale est généralement voisine de 45° afin d'assurer à la fois le centrage relatif de la vis et de l'écrou et la reprise des efforts principalement axiaux et occasionnellement radiaux.

Pour un ensemble avec jeu, la conception habituelle est telle que tous les contacts des éléments roulants porteurs (billes ou rouleaux) avec les flancs de filets de la vis et de l'écrou, s'effectuent suivant un angle ayant la même orientation, pour une direction donnée de la force axiale extérieure transmise par les éléments roulants, afin de répartir la charge sur un maximum de points de contact.

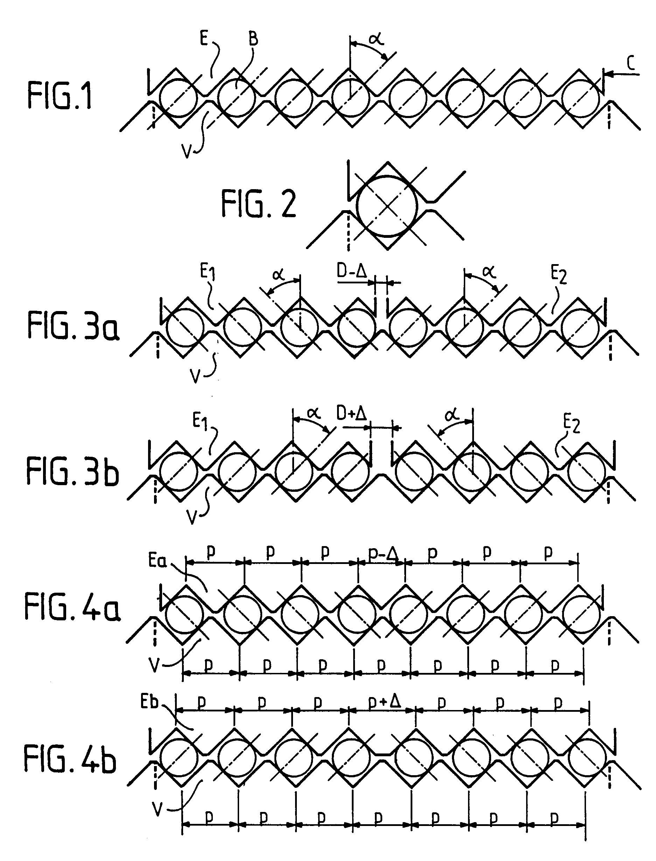

La figure 1 des dessins annexés illustre les conditions de contact qui s'établissent entre les billes B et les filets de l'écrou E et de la vis V dans un dispositif vis-écrou à jeu, sous l'effet d'une charge axiale C. On reconnaît que toutes les billes B se trouvent ici en contact suivant un angle $\alpha$ de même valeur et de même orientation avec les flancs de tous les filets.

Pour accroître la précision d'un tel dispositif vis-écrou, il est usuel de régler ou d'annuler le jeu interne du dispositif ou de réaliser une précharge interne.

Pour cela, plusieurs systèmes sont actuellement utilisés.

1°) Ecrou monobloc et éléments roulants de plus grand diamètre.

L'utilisation d'éléments roulants (billes ou rouleaux satellites) de plus grand diamètre permet de supprimer le jeu interne, les éléments roulants étant alors en contact avec les deux flancs des filets de la vis et de l'écrou.

Dans le cas des dispositifs vis-écrou à billes, les filets ont généralement un profil constitué par deux arcs de cercle afin de conserver des angles de contact de l'ordre de 45°, et chaque bille est alors en contact avec quatre flancs, tel que cela est représenté sur la figure 2 des dessins annexés. Les axes de rotation des billes sur elles-mêmes s'en trouvent modifiés par rapport aux axes de rotation instantanés dans le cas de deux contacts directement opposés, et il s'ensuit des phénomènes de glissement accrus, créant une augmentation du couple de frottement. Les couples nécessaires sont alors plus élevés et plus sensibles aux variations du diamètre de la vis, et la longévité de l'ensemble se trouve réduite du fait des frottements internes favorisant l'usure.

Pour les dispositifs vis-écrou à rouleaux satellites, l'axe de rotation des rouleaux ne change pas, que l'ensemble soit préchargé ou non, mais la réalisation de rouleaux au diamètre exact requis pour obtenir une précharge déterminée est techniquement et économiquement plus difficile car les rouleaux constituent des éléments plus complexes que des billes.

2°) Réduction du diamètre primitif de l'écrou, par déformation de ce dernier.

Au lieu d'interposer les éléments roulants de plus grand diamètre, on peut procéder à une réduction du diamètre primitif de l'écrou par déformation de ces derniers. Le phénomène est alors le même en ce qui concerne la modification de l'axe de rotation des billes, avec en plus, pour certaines réalisations, l'inconvénient que la piste de roulement dans l'écrou se trouve interrompue par une fente, pour faciliter la déformation de l'écrou. Les points de contact avec les éléments roulants de part et d'autre de cette discontinuité présentent bien entendu l'inconvénient de provoquer une concentration de charge accélérant le phénomène de fatigue en ces points.

3°) Ecrou formé de deux tronçons réglables l'un par rapport à l'autre.

Il existe divers systèmes connus utilisant des écrous formés de deux tronçons avec possibilité de positionnement ou de réglage de deux tronçons l'un par rapport à l'autre, de telle sorte que les éléments roulants (billes ou rouleaux) soient en contact avec des flancs différents des filets lorsque l'on compare l'un et l'autre des deux tronçons.

a) Par translation relative entre les deux tronçons d'écrou.

Par ajustement de la distance axiale entre les deux tronçons d'écrou, ces derniers conservant la même position angulaire relative, il est possible de régler le jeu ou de créer une précharge.

Cette translation relative peut se faire, par exemple

- par ajustement des deux faces opposées des deux tronçons, s'appuyant directement l'une contre l'autre ou sur une rondelle entretoise rigide ou élastique,
- par action sur les faces externes des deux tronçons d'écrou enfermés dans un boîtier,
- ou par tout autre système de même principe, les deux tronçons d'écrou conservant la même position angulaire relative pendant le réglage.

b) Par rotation relative entre les deux tronçons d'écrou.

Les deux tronçons d'écrou étant en appui axial fixe et opposé par rapport à des faces de référence (faces externes ou internes en appui direct ou avec entretoises intermédiaires), tout déphasage angulaire par rotation de l'un des deux tronçons par rapport à l'autre revient à rapprocher ou écarter les flancs opposés des filets des deux tronçons et à provoquer ainsi un résultat identique à celui de la translation décrite sous a).

Il existe différents systèmes connus pour obtenir ce déplacement angulaire relatif, de façon définitive ou ajustable, et pour maintenir la position angulaire relative des deux tronçons une fois le réglage effectué.

Suivant les deux modes de réglage précités, par translation ou rotation relative des deux tronçons d'écrou, le résultat final se traduit par une différence entre le pas théorique et la distance réelle entre filets dans la zone de transition entre les deux parties actives des filets portées par les deux tronçons.

Sur les figures 3a et 3b des dessins annexés, on a représenté les conditions de contact des billes B avec les filets de la vis V et des deux tronçons d'écrou $E_1$ et $E_2$ dans deux positions relatives différentes de ces deux tronçons d'écrou $E_1$ et $E_2$, à savoir sur la figure 3a avec une distance $D-\Delta$ entre les deux tronçons d'écrou $E_1$, $E_2$ et sur la figure 3b avec une distance $D+\Delta$ entre lesdits tronçons d'écrou.

4°) Ecrou monobloc avec réglage du jeu par déphasage central des filets de l'écrou au cours de l'usinage.

Une telle conception de l'écrou permet de s'affranchir des usinages supplémentaires nécessaires pour réaliser le centrage et le réglage de positionnement des deux tronçons d'écrou lorsque ces deux tronçons sont exécutés en deux pièces, comme indiqué sous 3°), et permet donc une meilleure concentricité tout en étant plus économique pour les ensembles monofilets à billes. Il conserve également, pour les ensembles monofilets à billes, l'avantage d'un contact oblique limité à deux points opposés par billes, évitant donc les inconvénients des systèmes à quatre points de contact par billes (frottement, usure).

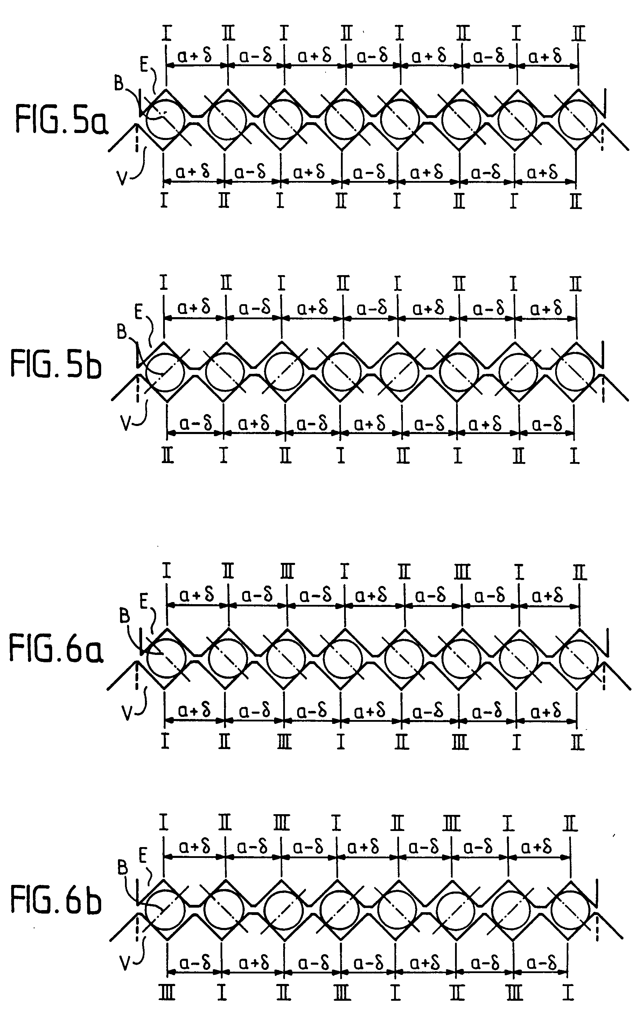

Les figures 4a et 4b des dessins annexés illustrent un tel dispositif comportant, associé à une vis V monofilet de pas p, soit un écrou monobloc $E_a$ ayant un filet de pas p, sauf en position centrale où l'intervalle entre deux filets consécutifs est réduit à p-$\Delta$, selon la figure 4a, soit un écrou monobloc $E_b$ sur lequel, en position centrale, l'intervalle entre deux filets consécutifs de pas p est augmenté à p+$\Delta$, selon la figure 4b.

Aussi bien pour les dispositifs à deux tronçons d'écrou séparés selon 3°) que pour les dispositifs à deux tronçons d'écrou monoblocs selon 4°), l'écrou doit comporter un circuit de billes indépendant pour chacun des deux tronçons d'écrou, pour éviter d'une part un trop grand nombre de billes par circuit et d'autre part les irrégularités de frottement interne qui se produiraient au passage des billes, dans la zone de transition entre les deux tronçons, d'un angle de contact donné à un angle de contact de direction opposée.

De plus, lorsque l'avance par tour (c'est-à-dire le pas) est importante, la longueur totale de l'écrou se trouve alors augmentée dans la mesure où la longueur de chaque tronçon d'écrou doit être au moins égale au pas (équivalent à un tour de billes). Cela pose des problèmes technologiques pour la réalisation d'écrous monoblocs lorsqu'il s'agit d'écrous rectifiés, et devient irréalisable si l'on veut envisager un usinage plus économique par taraudage.

En conclusion, les dispositifs vis-écrou à roulement connus tels qu'ils sont utilisés actuellement présentent, lorsque des moyens sont prévus pour le réglage des conditions de contact, notamment dans le cas de filets multiples, des inconvénients soit d'ordre fonctionnel soit d'ordre économique.

La présente invention vise une solution simple et économique pour réaliser un dispositif vis-écrou à roulement à filets multiples, notamment à grande avance par tour, permettant d'obtenir avec les mêmes éléments constitutifs (vis, écrou, éléments roulants), des conditions de contact différentes des éléments roulants avec les filets de la vis et de l'écrou, cela sous un encombrerment réduit et indépendamment du procédé de finition des filets de l'écrou et de la vis, tout en assurant un faible couple de frottement interne et une usure réduite. L'invention vise par ailleurs un dispositif vis-écrou à roulement permettant de réaliser, avec les mêmes éléments constitutifs, un ensemble pouvant avoir des jeux ou des précharges de valeurs différentes. Enfin, l'invention vise un dispositif vis-écrou à roulement à filets multiples permettant de réaliser un ensemble adapté de façon optimale aux efforts à supporter.

Le dispositif vis-écrou à roulement conforme à l'invention comprend une vis et un écrou à filets multiples de pas identique, des éléments roulants disposés entre les filets de la vis et de l'écrou, et des moyens pour le réglage des conditions de contact des éléments roulants avec les filets de la vis et de l'écrou. Selon l'invention, les filets consécutifs présentent, sur la vis et sur l'écrou, des intervalles variant de façon répétitive avec une périodicité correspondant au pas des filets, de telle manière que le changement de la position de montage de la vis par rapport à l'écrou permet de faire varier les conditions de contact des éléments roulants avec les filets de la vis et de l'écrou. La différence principale, par rapport aux dispositifs connus, consiste donc dans le fait que les mêmes dispositions prévues pour le réglage des conditions de contact sont prises à la fois sur l'écrou et sur la vis, sur toute la longueur de ces éléments.

Dans le cas le plus simple, la vis et l'écrou présentent un nombre pair de filets et les intervalles entre les filets présentent deux valeurs différentes se répétant de façon alternée. Ainsi lorsque la vis est associée à l'écrou de manière que les filets de la vis et de l'écrou soient en phase, on obtient les mêmes conditions de contact de tous les éléments roulants avec les filets de la vis et de l'écrou. Au contraire lorsque l'écrou est associé à la vis de manière que les filets de la vis et de l'écrou soient déphasés, on obtient des contacts opposés des éléments roulants avec les filets successifs de la vis et de l'écrou.

La vis et l'écrou peuvent également présenter un nombre impair de filets et les intervalles entre les filets présenter deux valeurs différentes se répétant de façon alternée. Dans ce cas, les conditions de contacts des éléments roulants avec les filets successifs de l'écrou et de la vis sont les mêmes lorsque les filets sont en phase et sont opposés lorsque les filets sont déphasés. Par contre, du fait du nombre impair de filets, l'association de la vis à l'écrou avec déphasage des filets procure des contacts opposés avec une orientation privilégiée dans un sens.

Dans les deux cas, selon que les filets sont en phase ou déphasés, on obtient, en fonction du diamètre des billes, un jeu axial ou un jeu nul lorsque les filets sont en phase et un jeu nul ou une précharge interne lorsque les filets sont déphasés.

D'autres conditions, concernant le nombre des filets et la variation des intervalles entre les filets, permettent d'autres combinaisons remarquables en ce qui concerne le réglage du jeu et de la précharge en fonction de la position de la vis par rapport à l'écrou.

En se référant aux figures 5 à 8 des dessins annexés, on va décrire ci-après plus en détail plusieurs modes de réalisation illustratifs et non limitatifs d'un dispositif vis-écrou à billes conforme à l'invention; sur les dessins :

les figures 5a et 5b illustrent un premier mode de réalisation de l'invention, avec un écrou et une vis à deux filets et à deux valeurs d'intervalle entre filets consécutifs;

les figures 6a et 6b représentent un autre mode de réalisation de l'invention, avec un écrou et une vis à trois filets et à deux valeurs d'intervalle entre filets consécutifs;

les figures 7a à 7d repésentent un troisième mode de réalisation de l'invention, avec un écrou et une vis à quatre filets et à quatre intervalles progressifs;

les figures 8a à 8d représentent un quatrième mode de réalisation de l'invention, avec un écrou et une vis à trois filets et à trois intervalles progressifs entre filets consécutifs.

Sur le système vis-écrou à billes conforme à l'invention tel qu'illustré par les figures 5a et 5b, l'écrou E et la vis V comportent deux même filets I et II avec deux valeurs d'intervalles différents, à savoir $a + \delta$ entre les filets I et II et $a-\delta$ entre les filets II et I.

Selon la figure 5a, la vis V et l'écrou E sont associés de manière que les filets de même repère se trouvent en phase. Dans ces conditions, toutes les billes B ont les mêmes conditions de contact avec les filets, ce qui est comparable à un dispositif traditionnel exécuté avec une égale distance entre tous les filets sur la vis et sur l'écrou.

Selon la figure 5b, les filets de vis V et de l'écrou E sont déphasés, c'est-à-dire les filets I de la vis V sont associés aux filets II de l'écrou E, et inversement. Dans ces conditions, les billes B ont des contacts obliques en opposition avec les filets consécutifs.

De plus, si le diamètre des billes B est choisi de manière à obtenir un jeu nul dans la position selon la figure 5a, la position selon la figure 5b, réalisée avec les mêmes billes, conduit à une précharge interne équivalente à $-2\,\delta$.

Inversement, pour un jeu axial de valeur $2\,\delta$ dans le cas de la figure 5a, on obtient un jeu nul dans le cas de la figure 5b.

Un changement de diamètre des billes entre la position selon la figure 5a et la position selon la figure 5b permet d'augmenter les variantes possibles de jeu et de précontrainte.

Dans le mode de réalisation suivant les figures 6a et 6b, la vis V et l'écrou E présentent trois filets avec deux intervalles différents entre filets consécutifs, à savoir $a + \delta$ entre les filets I et II, $a-\delta$ entre les filets II et III et a-δ entre les filets III et I.

En associant la vis V à l'écrou E dans la position selon la figure 6a, dans laquelle les filets de la vis sont en phase avec les filets de l'écrou, on obtient un contact identique pour toutes les billes B, de façon analogue à la figure 5a.

Par contre, lorsque les filets de la vis V et de l'écrou E sont déphasés d'un cran selon la figure 6b, on obtient, pour les billes B, des contacts obliques d'orientation alternée, avec une précharge axiale de valeur -2 δ.

Du fait du nombre impair de filets, il se produira automatiquement une orientation privilégiée des contacts obliques, ce qui peut être avantageusement mis à profit pour faire supporter au dispositif à vis-écrou des efforts axiaux prépondérants dans un sens ou dans l'autre.

Suivant le mode de réalisation des figures 7a à 7d, le dispositif à vis-écrou comprend un nombre pair de filets, à savoir quatre filets I, II, III, IV dans l'exemple représenté, avec des intervalles progressifs a (entre IV et I), a+δ (entre I et II), a+2δ (entre II et III) et a+3δ (entre III et IV).

Lorsque les filets de même repère de la vis V et de l'écrou E sont en phase, comme représenté sur la figure 7a, on obtient des contacts obliques de même orientation pour toutes les billes B.

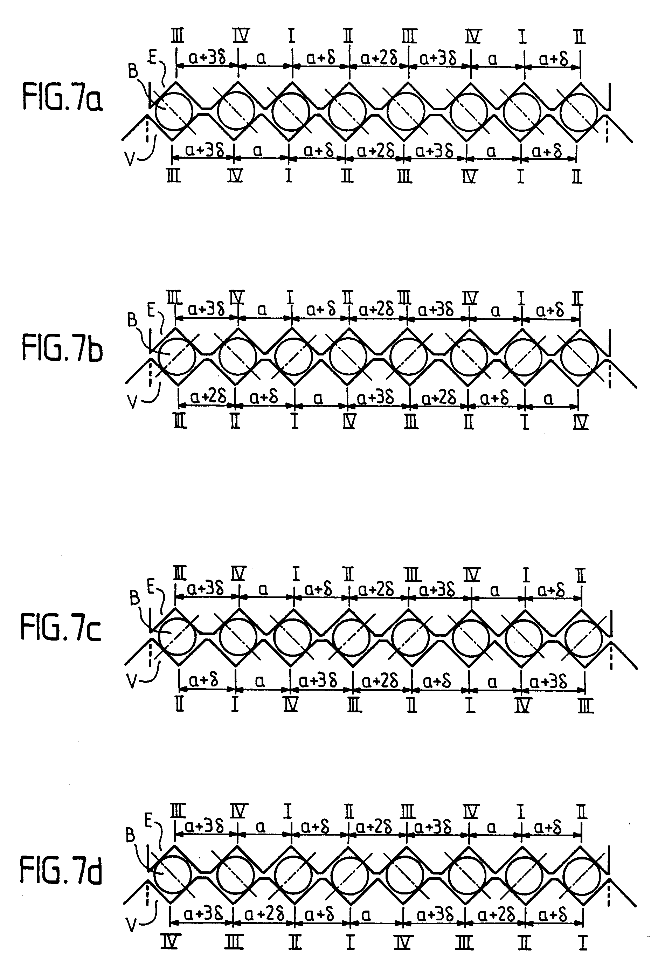

En retournant la vis V dans l'écrou E, on obtient, selon la figure 7b, des contacts opposés alternées, avec les dispositions suivantes :

| écrou | intervalle entre filets | | a | | a+δ | | a+2δ | | a+3δ | | a | |
|---|---|---|---|---|---|---|---|---|---|---|---|---|
| | repère du filet | IV | | I | | II | | III | | IV | | I |
| vis | repère du filet | II | | I | | IV | | III | | II | | I |
| | intervalle entre filets | | a+δ | | a | | a+3δ | | a+2δ | | a+δ | |
| Différence des intervalles entre filets écrou-vis | | | -δ | | +δ | | -δ | | +δ | | -δ | |

Si, dans le cas de la figure 7a, on a sélectionné des billes B pour obtenir un jeu nul, les mêmes vis, écrous et billes redisposés suivant la figure 7b conduiront à une précharge axiale de -δ/2 avec le même jeu de billes.

Dans le cas de la figure 7c, on a procédé, en plus du retournement de la vis suivant la figure 7b, à un déphasage d'un cran, ce qui donne les dispositions suivantes :

| écrou | intervalle entre filets | | a | | a+δ | | a+2δ | | a+3δ | | a | |
|---|---|---|---|---|---|---|---|---|---|---|---|---|
| | repère du filet | IV | | I | | II | | III | | IV | | I |
| vis | repère du filet | I | | IV | | III | | II | | I | | IV |
| | intervalle entre filets | | a | | a+3δ | | a+2δ | | a+δ | | a | |
| Différence des intervalles entre filets écrou-vis : | | | 0 | | -2δ | | 0 | | +2δ | | 0 | |
| si on cumule les écarts : | | | 0 | | -2δ | | -2δ | | 0 | | 0 | |

On obtient ainsi, en recentrant l'intervalle III-IV de l'écrou E avec l'intervalle I-II de la vis, une alternance de contacts obliques opposés par paire, avec une précharge axiale de -δ.

Dans la position selon la figure 7d correspondant à un déphasage supplémentaire tel que l'intervalle II-III de l'écrou E soit centré avec l'intervalle IV-I de la vis, on retrouve des conditions de contact analogues à celles de la figure 7c, c'est-à-dire une alternance de contacts opposés par paire.

5

Avec différents jeux de billes B, on peut obtenir, avec un dispositif suivant les figures 7a à 7d, les combinaisons suivantes

| Figure | 7a | 7b | 7c ou | 7d |
|---|---|---|---|---|
| 1er jeu de billes | jeu 0 | précharge -$\delta$/2 | précharge -$\delta$ | précharge -$\delta$ |
| 2ème jeu de billes | jeu +$\delta$/2 | jeu 0 | précharge -$\delta$/2 | précharge -$\delta$/2 |

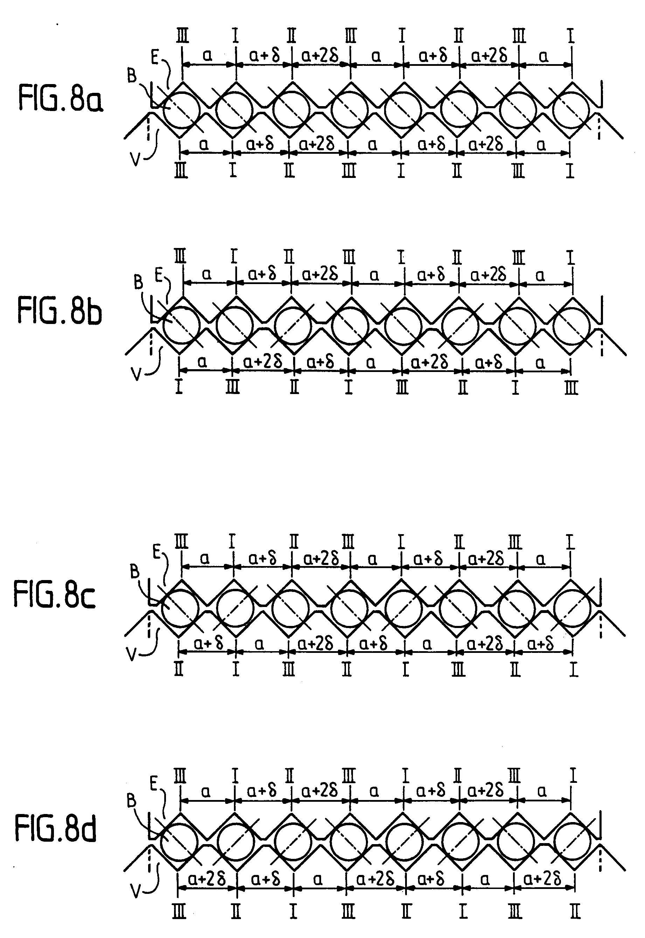

Les figures 8a à 8d représentent un dispositif vis-écrou sur lequel la vis et l'écrou présentent un nombre impair de filets, en l'occurrence trois filets I, II, III, avec des intervalles progressifs a, a+$\delta$, a+2$\delta$ entre les filets consécutifs.

Lorsque les filets de même repère de la vis et de l'écrou sont en phase, selon la figure 8a, on obtient des contacts obliques de même orientation pour toutes les billes B.

Pour obtenir des contacts opposés de manière alternée, on retourne la vis V par rapport à l'écrou E.

En supposant que le dispositif vis-écrou comporte un jeu nul dans le cas de la figure 8a, il est possible, après retournement de la vis par rapport à l'écrou, d'obtenir par exemple une précharge -$\delta$/2 en cas de déphasage suivant la figure 8b ou suivant la figure 8c, ou une précharge -$\delta$ en cas de déphasage suivant la figure 8d, avec chaque fois une prépondérance des contacts obliques dans un sens.

Bien entendu les modes de réalisation décrits ci-desssus et illustrés par les dessins annexés n'ont été donnés qu'à titre d'exemples indicatifs et non limitatifs et de nombreuses modifications et variantes sont possible dans le cadre de l'invention, tant en ce qui concerne le nombre de filets que le nombre des valeurs différentes des intervalles entre filets consécutifs. Dans tous les cas, les filets sur la vis et sur l'écrou sont exécutés de manière que lorsque les filets de la vis et de l'écrou sont en phase, tous les éléments de roulement ont des contacts obliques de même orientation avec les filets de la vis et de l'écrou, tandis que par déphasage des filets de la vis par rapport à l'écrou ou par retournement de la vis dans l'écrou, on obtient des contacts de directions opposées de manière alternée.

**Revendications**

1. Dispositif vis-écrou à roulement comprenant une vis et un écrou à filets multiples de pas identique, des éléments roulants disposés entre les filets de la vis et de l'écrou, et des moyens pour faire varier les conditions de contact des éléments roulants avec les filets de la vis et de l'écrou, caractérisé par le fait que les filets consécutifs présentent sur la vis (V) et sur l'écrou (E) des intervalles variant de façon répétitive avec une périodicité correspondant au pas, le changement de la position de montage de la vis par rapport à l'écrou permettant de faire varier les conditions de contact des éléments roulants (B) avec les filets de la vis et de l'écrou de telle manière que les éléments roulants présentent des contacts obliques tous de même sens dans une position de montage de la vis par rapport à l'écrou et des contacts obliques opposés alternés dans une ou plusieurs autres positions de la vis par rapport à l'écrou, les mêmes éléments constitutifs permettant ainsi de réaliser au choix un ensemble avec jeu, sans jeu ou à précharge interne.

2. Dispositif selon la revendication 1, caractérisé par le fait que la vis et l'écrou présentent un nombre pair de filets et que les intervalles entre filets présentent deux valeurs différentes se répétant de façon alternée.

3. Dispositif selon la revendication 1, caractérisé par le fait que la vis et l'écrou présentent un nombre impair de filets et que les intervalles entre filets présentent deux valeurs différentes.

4. Dispositif selon la revendication 1, caractérisé par le fait que la vis et l'écrou présentent un nombre pair de filets et que les intervalles entre filets consécutifs varient de façon progressive.

5. Dispositif selon la revendication 1, caractérisé par le fait que la vis et l'écrou présentent un nombre impair de filets et que les intervalles entre filets consécutifs varient de façon progressive.

6. Dispositif suivant l'une quelconque des revendications précédentes, caractérisé par le fait que les changements de position s'effectuent par déphasage des filets de la vis par rapport aux filets de l'écrou.

7. Dispositif suivant l'une quelconque des revendications précédentes, caractérisé par le fait que le changement de position s'effectue par retournement de la vis par rapport à l'écrou.

8. Dispositif suivant l'une quelconque des revendications 5 à 7, avec un nombre impair de filets, caractérisé par le fait que le nombre des contacts obliques dans un sens est plus élevé que le nombre de contacts obliques dans le sens opposé.

**Claims**

1. Screw-nut device of rolling bearing type comprising a screw and a nut with multiple threads of identical pitch, rolling elements disposed between the threads of the screw and of the nut, and means for causing the conditions of contact of the rolling elements with the threads of the screw and of the nut to vary, characterised in that the consecutive threads have on the screw (V) and on the nut (E) intervals varying in repetitive manner with a periodicity corresponding to the pitch, changing of the position of assembly of the screw with respect to the nut making it possible to vary the conditions of contact of the rolling elements (B) with the threads of the screw and of the nut so that the rolling elements present oblique contacts all in the same direction in one position of assembly of the screw with respect to the nut and alternately opposed oblique contacts in one or more other positions of the screw with respect to the nut, the same constituent elements thus permitting the construction of an assembly optionally with clearance, without clearance or with internal preload.

2. Device according to Claim 1, characterised in that the screw and the nut have an even number of threads and in that the intervals between threads have two different values repeated in alternate manner.

3. Device according to Claim 1, characterised in that the screw and the nut have an odd number of threads and in that the intervals between threads have two different values.

4. Device according to Claim 1, characterised in that the screw and the nut have an even number of threads and in that the intervals between consecutive threads vary in progressive manner.

5. Device according to Claim 1, characterised in that the screw and the nut have an odd number of threads and in that the intervals between consecutive threads vary in progressive manner.

6. Device according to any of the preceeding Claims, characterised in that the changes of position are effected by dephasing the threads of the screw with respect to the threads of the nut.

7. Device according to any of the preceeding Claims, characterised in that the changing of position is effected by turning the screw round with respect to the nut.

8. Device according to any of Claims 5 to 7, with an odd number of threads, characterised in that the number of the oblique contacts in one direction is higher than the number of the oblique contacts in the opposite direction.

**Patentansprüche**

1. Wälzkörpergewindespindel mit einer Spindel und einer Mutter, wobei die Spindel und die Mutter jeweils mehrere Gewindegänge mit identischer Steigung aufweisen, mit zwischen den Gewindegängen der Spindel und der Mutter angeordneten Wälzkörpern und mit Mitteln, um die Berührungsverhältnisse der Wälzkörper in den Gewindegängen der Spindel und der Mutter zu verändern, dadurch gekennzeichnet, daß die aufeinanderfolgenden Gewindewindungen auf der Spindel (V) und in der Mutter (E) Abstände aufweisen, die sich mit einer der Steigung entsprechenden Periozizität wiederholend variieren, wobei es die Veränderung der Montageposition der Spindel in Bezug auf die Mutter ermöglicht, die Berührungsverhältnisse der Wälzkörper (B) in den Gewindegängen der Spindel und der Mutter in der Art zu variieren, daß die Wälzkörper bei einer Montageposition der Spindel in Bezug auf die Mutter allesamt schräg orientierte Berührungen mit gleichem Richtungssinn und in einer oder mehreren anderen Positionen der Spindel in Bezug auf die Mutter alternierend entgegengesetzt schräg orientierte Berührungen aufweisen, wodurch es die gleichen Bauelemente erlauben, wahlweise eine Anordnung mit Spiel, ohne Spiel oder mit innerer Vorspannung zu verwirklichen.

2. Vorrichtung nach Anspruch 1, dadurch gekennzeichnet, daß die Spindel und die Mutter eine gerade Anzahl von Gewindegängen aufweisen und daß die Abstände zwischen den (benachbarten) Gewindewindungen zwei unterschiedliche, sich alternierend wiederholende Werte aufweisen.

3. Vorrichtung nach Anspruch 1, dadurch gekennzeichnet, daß die Spindel und die Mutter eine ungerade Anzahl von Gewindegängen aufweisen und daß die Abstände zwischen (benachbarten) Gewindewindungen zwei unterschiedliche Werte aufweisen.

4. Vorrichtung nach Anspruch 1, dadurch gekennzeichnet, daß die Spindel und die Mutter eine gerade Anzahl von Gewindegängen aufweisen und daß die Abstände zwischen aufeinanderfolgenden (benachbarten) Gewindewindungen progressiv variieren.

5. Vorrichtung nach Anspruch 1, dadurch gekennzeichnet, daß die Spindel und die Mutter eine ungerade Anzahl von Gewindegänge aufweisen und daß sich die Abstände zwischen aufeinanderfolgenden (benachbarten) Gewindewindungen progressiv ändern.

6. Vorrichtung nach einem der vorhergehenden Ansprüche, dadurch gekennzeichnet, daß die Änderung der Position durch Versatz der Gewindegänge der Spindel relativ zu den Gewindegängen der Mutter erhalten wird.

7. Vorrichtung nach einem der vorhergehenden Ansprüche, dadurch gekennzeichnet, daß die Veränderung der Stellung durch Wenden der Spindel in Bezug auf die Mutter erhalten wird.

8. Vorrichtung nach einem der Ansprüche 5 bis 7 mit einer ungeraden Anzahl von Gewindegängen, dadurch gekennzeichnet, daß die Anzahl der schräg orientierten Berührungsbedingungen in einem Richtungssinn größer ist als die Anzahl der schräg orientierten Berührungsbedingungen in dem entgegengesetzten Richtungssinn.

FIG.1

FIG. 2

FIG. 3a

FIG. 3b

FIG. 4a

FIG. 4b

FIG.5a

FIG.5b

FIG.6a

FIG.6b

EP 0 514 261 B1

FIG.7a

FIG.7b

FIG.7c

FIG.7d

11

FIG.8a

FIG.8b

FIG.8c

FIG.8d